# EUROPEAN PATENT APPLICATION

(11) **EP 4 053 048 A1**
(43) Date of publication of application: **07.09.2022**
(21) Application number: 21160424.4
(22) Date of filing: 03.03.2021
(51) Int. Cl.: B65G 1/137, B65G 1/02

(54) **ADAPTIVE STORAGE UNIT**

(71) Applicant: Fameccanica.Data S.p.A., 66020 San Giovanni Teatino (CH) (IT)
(72) Inventor: ANTONIOLI, Matteo, I-66020 San Giovanni Teatino (Chieti) (IT)
(74) Representative: Marchitelli, Mauro

(57) **Abstract**

A storage unit (1; 1') comprising:
- a first frame (2),
- a second frame (4) comprising a storage compartment (6) partitioned into one or more storage containers (8) having access openings (10),
wherein the second frame (4) is movable with respect to the first frame (2) from a first position wherein the access openings (10) have a first orientation, and a second position wherein the access openings (10) have a second orientation.

## Description

### Field of the invention

The invention relates to storage facilities for logistics, particularly robotized logistics. The invention particularly refers to storage facilities for robotized logistics centres such as e-commerce logistics centres.

### Prior art

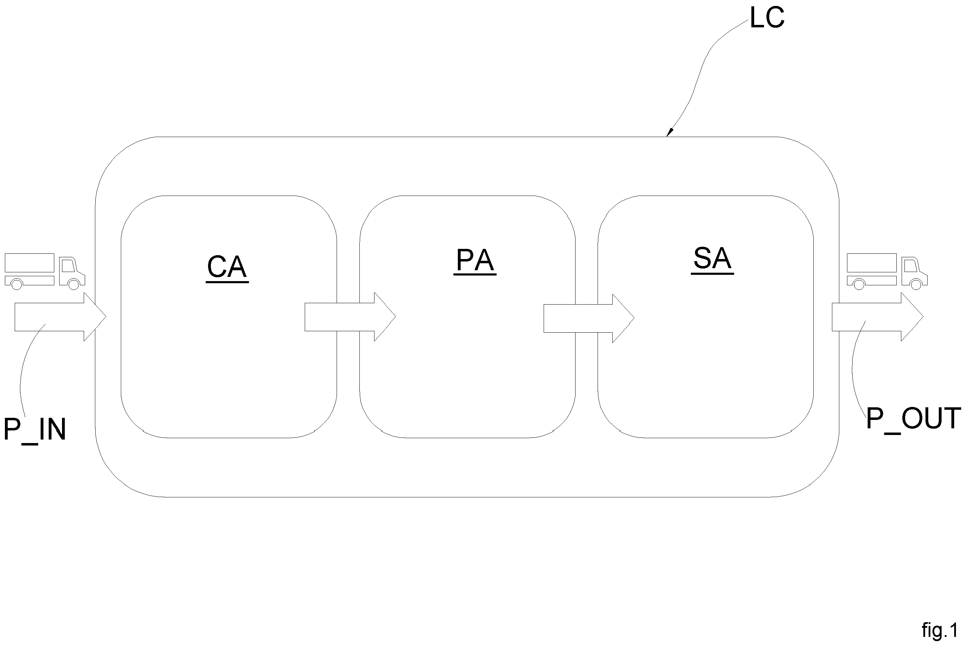

With reference to figure 1, from a state of the art landscaping on the organization of operational processes within large logistics centres LC in the e-commerce business with a high degree of automation, the following macro-areas can be identified.

A clustering area CA, wherein the incoming products (product flow P IN) from suppliers are received, they are grouped into clusters based on the purchase affinity between the various products and finally they are collected inside containers according to the specific order to be fulfilled, the containers thus obtained are then sent to the next area (packaging area PA)

A packaging area PA, wherein the containers that group the products related to a specific purchase order are received at an entry point, and are then transferred to the package that will be used for shipping. The package is then abelled with a barcode to allow correct tracking during the rest of the processing and sent to the next area (sorting area SA).

A sorting area SA, wherein packages are received in random order, the parcels are then singled out, identified by their barcode and finally sorted into clusters for shipping (product flow P_OUT).

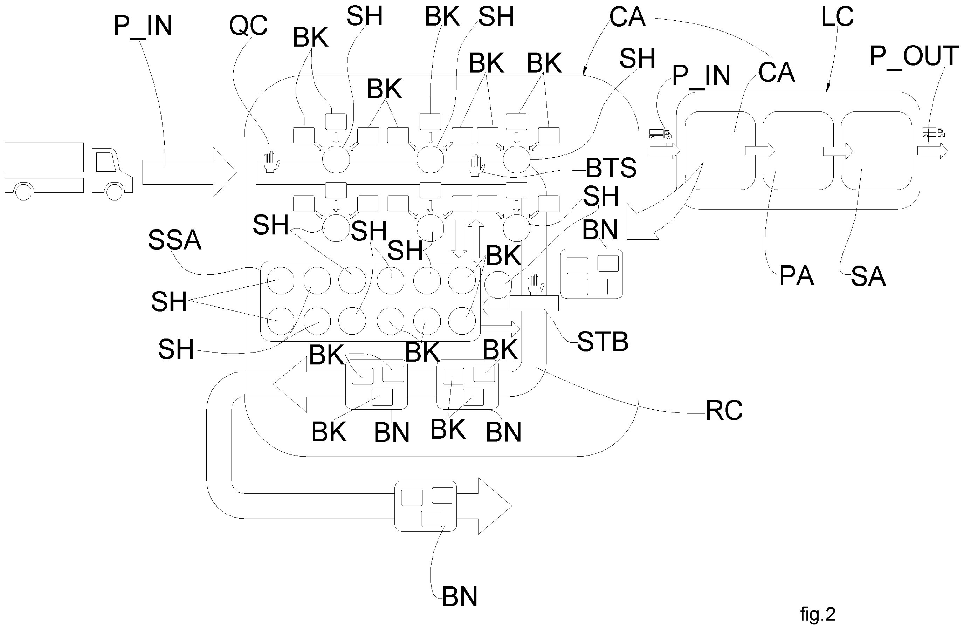

With a view to a development of innovative robotic applications, evidence has been found that dedicated robotic applications are already in place for the packaging area PA and the sorting area SA, while the in the clustering area CA operations are performed which are essentially manual, as will be detailed with reference to figure 2.

A first manually operated area corresponds to a quality control area QC (product-to-bin area). Products from the suppliers (in figure 2 different products are associated to blocks with a different lettering) are collected at the quality control area QC where operators check whether the products are intact and comply with the required specifications. After that, the operators place the products inside baskets BK (the so-called "bins") that are sent via roller conveyors RC to the next area.

A second manually operated area corresponds to a bin-to-shelf area BTS. In a shelf filling area the bins BK arrive by the roller conveyor RC at an operator station where both the full bins BK and shelves SH to be filled by the bins BK converge.

Shelves SH act as clusters wherein objects (themselves clustered in bins) are organized by purchase affinity. When the bins BK are not needed in picking or storage operations they are left in the shelf filling area; on the other hand, when a shelf SH needs to be filled or when a product inside the shelf SH is put on sale, an automated guided vehicle (AGV) goes to a shelf storage area SSA, picks up the shelf and delivers the same where required.

At this point, the control panel indicates to the operator which product to pick from the bin and on which location of the shelf to place it. Once the operator confirms the operation on a control panel, the object can be purchased online in real time and the AGV returns the shelf SH to the storage area SSH.

A third manually operated area corresponds to a shelf-to-bin area STB. At this point the freshly/newly filled shelf is standing by at the storage area until a customer finalizes an online purchase of a product contained in the same shelf. Upon purchase, the shelf is picked up by an AGV and taken to a further station whereat an operator is in charge of filling a basket BK with all the products that make up a specific purchase order. The station control panel tells the operator which objects to pick from the various locations of the shelf and to transfer them to a bin BN that will be sent to the next area. Each bin BN comprises one or more products from the shelves SH, which essentially serve as storage units for sorted disparate products available in the clustering area CA when such products are to be kept at standby for an online purchase.

In summary, the main operations within the clustering area CA concern the handling of single objects of various consistency, shape, size and color. The handling is currently all manual, and includes:
- product-to-bin handling
- bin-to-shelf handling
- shelf-to-bin handling

With a view to a development of innovative robotic applications it would be immediate to think of replacing operator(s) with robots to perform the same handling operations. However, this is other than straightforward at least for the following reasons.

As of today, due to the nature of the processed objects, quality control operations must continue to be carried out by an operator, thereby product-to-bin handling are essentially excluded from automation.

The use of shelves, which correspond to storage facilities with an essentially vertical development with optimized picking points/areas based on ergonomic criteria, in connection with human operators has the following advantages compared to bins:
- effectiveness of organizing objects by categories within the shelves,
- ergonomics of withdrawal and deposit for the operator,
- reduced footprint (ease of handling, storage capacity).

Robotic handling from shelves is, however, far from optimal in that robotic handling units - especially overhead units widely used in the business concerned, simply do not have a motion range capable of matching the range of available picking points on the shelves. Even in the unlikely scenario of using standing robots in place of overhead robots, motion range issue could partly be solved (although not completely), at the cost of drastically reducing the processing rate

Conversely, bins would be decidedly more effective in use with robotic handling units in that they correspond - essentially - to open top (or openable top) containers which provide immediate access to overhead robotic handling units for picking and sorting of the products.

### Object of the invention

The object of the invention is to overcome the above mentioned drawbacks. More specifically, the object of the invention is to automate at least part of the manual operations in cluster areas of logistic centres via the use of one or more robotic handling units without compromising on processing rate or picking points range.

### Summary of the invention

The object of the invention is achieved by a storage unit having the features of the appended claims, which form an integral part of the technical disclosure provided herein in relation to the invention.

### Brief description of the figures

The invention will now be described with reference to the attached figures, provided purely by way of non limiting example, wherein:
- figures 1 and 2 are representative of the state of the art and schematically illustrate the layout of a logistics center and a cluster unit thereof, respectively,

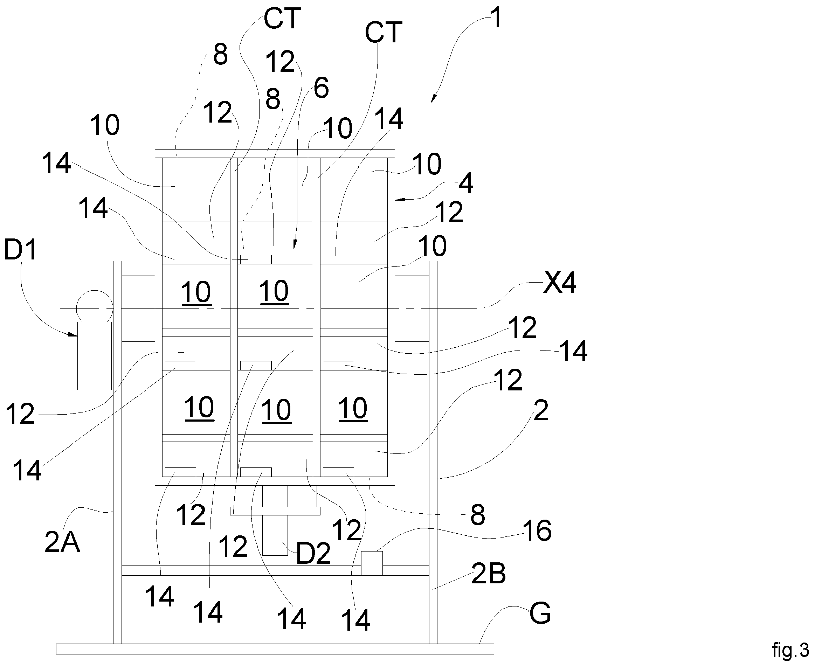

- figure 3 is a schematic representation of a storage unit according to first embodiments of the invention,
- figures 4A to 4D are representative of different and sequential operating conditions of the storage unit according to the invention,
- figures 5A, 5B are representative of further, sequential, operating conditions alternative to those in figures 4C and 4D.
- figures 6 and 7 are representative of exemplary operation layouts of a clustering area based on the storage units according to embodiments of the invention,
- figures 8A to 8D are schematic representations of second embodiments of the invention, also representing sequential operating conditions thereof
- figures 9 to 11 correspond to figures 6 and 7, but refer to the second embodiments herein, and
- figure 12 is a schematic representation of features common to all the embodiments herein.

### Detailed description

Reference number 1 in figure designates a storage unit according to first embodiments of the invention. The storage unit 1 comprises a first frame 2 and a second frame 4 coupled to the first frame 2 and movable with respect to the first frame 2. In a preferred embodiment such as that shown in the figures, relative motion is achieved by virtue of a pivotal connection between the second frame 4 and the first frame 2 around an axis X4.

The first frame 2 is a standing frame configured to sit (preferably, as in the embodiments depicted in the figures) in an upright position onto a bearing surface G, so to support the storage unit 1 overall (and in particular the second frame 4) onto the bearing surface G.

The first frame 2 may comprise, in preferred embodiments such as those shown in the figures, a first and a second uprights 2A, 2B on opposite sides of the second frame 4 and pivotally connected thereto at the axis X4, and a crosspiece 2C bridging the uprights 2A and 2B below the second frame 4. So to say, the layout of the first and second frames 2, 4 is at least roughly similar to that of a tilting blackboard, wherein the second frame being the counterpart to the blackboard.

The second frame 4 comprises a storage compartment 6 partitioned into one or more storage containers 8, each having at least one access opening 10. Preferably, the containers 8 have each a single access opening 10 and all of the access openings 10 face one and the same side of the second frame 6. The partition of the storage compartment 6 may be provided, for instance, by divider plates arranged height wise and width wise into the compartment to define a matrix of containers 8.

Each of the access openings 10 includes a closure device 12 operable to selectively enable or disable access to the respective storage container 8 through the access opening 10. In a preferred embodiment, each closure device 12 is provided as a rolling shutter so that when access to the container 8 through the access opening 10 is to be enabled, the closure device does not remain exposed or at places which could hinder picking operations.

Each storage container 8 furthermore comprises an identification feature 14, preferably chosen from among a barcode, a RFID tag, or a QR code, which allows the identification of the products in the container upon reading or decoding of the same. An identification feature 16, again chosen from among a barcode, a RFID tag, or a QR code may be provided on the frame 2 (or at other locations on the storage unit 1, for instance the frame 4, depending on the needs) as a unique identifier for the storage unit 1 when the same is used in a cluster or a facility with other identical or similar storage units.

According to the invention, the second frame 4 is movable with respect to the first frame 2 from a first position wherein the access openings 10 have a first orientation with respect to the first frame 2, and a second position, wherein the access openings 10 have a second orientation with respect to the first frame.

In preferred embodiments, the second frame 4 is pivotally connected to the first frame 2, whereby the second frame is rotatable with respect to the first frame, in other embodiments cam-based connection mechanisms can be envisaged whereby the transition from the first position to the second position maybe achieved via a combined rotational and translational motion.

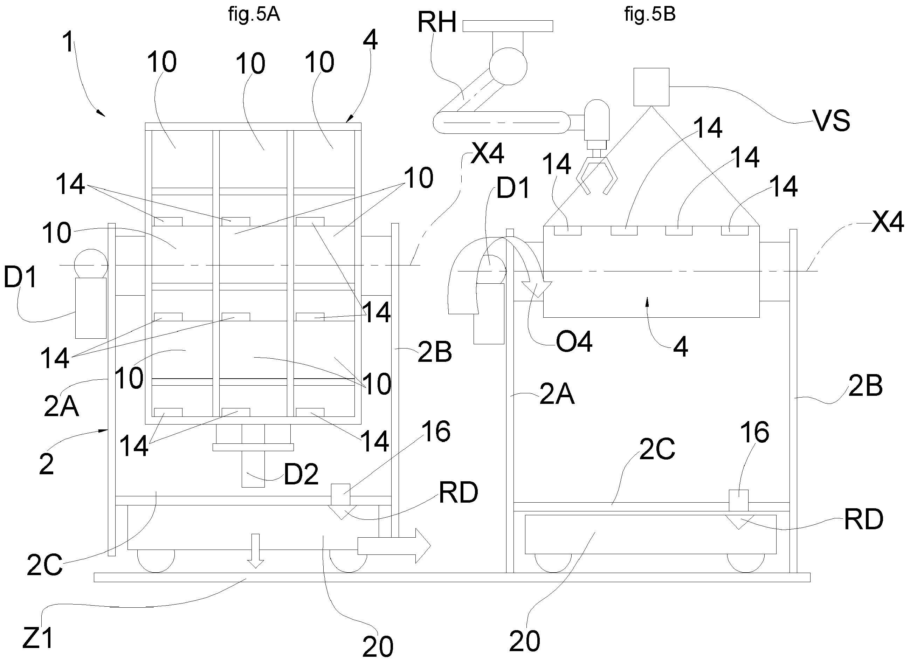

In preferred embodiments, the first position of the second frame 4 is an upright position such as that visible in figure 1, and the second position of the frame 4 is a recumbent position, particularly a horizontal position such as that visible in figure 5B, whereby the one or more access openings 10 face upwards when the second frame 4 is in the second position. The terms "upright" and "recumbent" are defined with respect to the bearing surface G, i.e. the upright position is such that the orientation of the frame 4 (and the storage compartment 6 accordingly) is a standing orientation (hence, upright) with respect to the bearing surface/ground G. similarly, the recumbent position is such that the orientation of the frame 4 (and the storage compartment 6 accordingly) is a recumbent one with respect to the bearing surface/ground G.

In general, the first and second position may be optimized based on the processing requirements. While the upright position may be regarded as anyway preferred as a first position, the second position may be chosen to be recumbent to a variable extent (i.e. horizontal or slightly tilted).

In the storage unit 1 the second frame 4 is rotatably operable in the relative motion with respect to the first frame by a drive unit D1 onboard the storage unit 1, particularly onboard the first frame 2. The drive unit D1 may be provided as a motor-reducer unit directly driving the pivotal supports of the second frame 4 (hence having an output shaft coaxial to the axis X4), or else as a motor unit powering driveline which may output at the pivotal supports of the frame 4 or, depending on the mechanism, may output at the frame 4 (for instance via an articulated link driveline).

Preferably, a further drive unit D2 may be provided that controls the closure devices 12 to determine enablement or disablement conditions of the access openings 10 (i.e. of the access to the containers 8 through the access openings 10). The drive unit D2 may be configured to operate the set of closure devices 12 onboard the unit 1 altogether, i.e. with a common drive achieved, for instance, chain or belt transmissions CT supported by guide members provided at the very partitions between adjacent containers 8 and engaging gear wheels or pulleys at the rolling axes of the shutters 12.

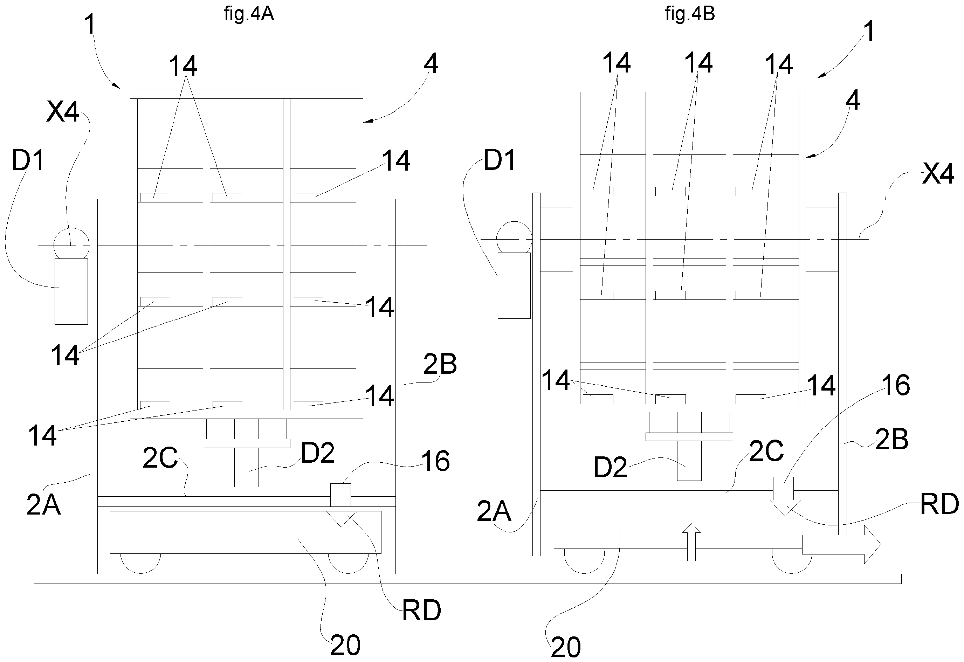

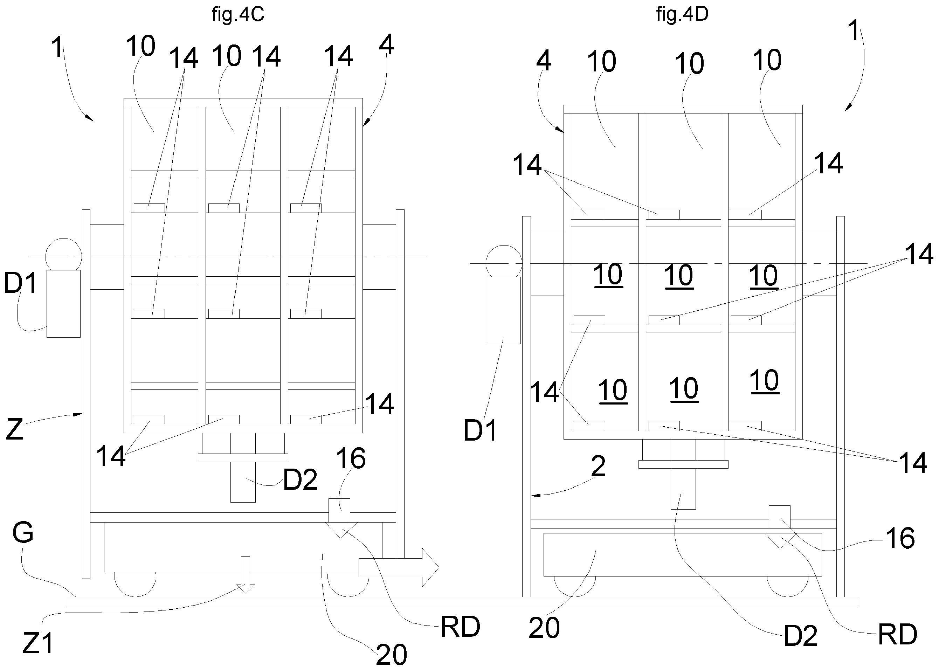

With reference to figures 4 to 8, the operation of the storage unit 1 will now be described both with reference to the interaction with a human operator and with reference to the interaction with a robotic handling unit.

Figures 4A to 4D are representative of an operating sequence of the storage unit 1 which ends in the storage 1 being presented to a human operator for manual product handling to and from the storage unit 1. It should be noted, however, that the steps depicted in figures 4A to 4C are common to both the "human" and the "robotic" interaction, as they correspond to transfer steps of the storage unit 1.

The storage unit 1 operates as an adaptive shelf in a clustering area CA of a logistics storage facility. When the storage unit 1 is inactive, it may be temporarily left at standby in the shelf storage area SSA described with reference to figure 2, whereby a transfer to a target location can be arranged when needed, i.e. when the storage unit 1 has to be replenished with products or emptied (partially or totally) to assemble a purchase order.

With reference to figure 4A, transfer of the storage unit 1 from a standby location to a target location (and more in general transfer of the storage unit 1, whatever the route) is performed via a mobile carrier such as an automated guided vehicle designed by the reference 20 in the figure. In preferred embodiments, the mobile carrier 20 is an automated guided vehicle with a variable ride height, i.e. capable of raising or lowering the frame thereof with respect to a bearing surface so to take delivery of and release the storage unit 1 through the variation of the ride height. More specifically, the mobile carrier 20 is configured to approach the storage unit 1 and position at a resting location of the first frame 2 on the bearing surface G. more to the point, the mobile carrier 20 is configured to position - once the approach is completed and the mobile carrier 20 is at rest - underneath the frame 2 of the storage unit 1, particularly under the crosspiece 2C, with a first - low - ride height (figure 4A - APPROACH). The mobile carrier 20 is then configured to increase the ride height to engage the frame 2 and lift the storage unit 1 from the bearing surface G, so that the storage unit 1 essentially comes to ride piggyback on the mobile carrier 20 (figure 4B - LIFT). The increase of the ride height of the mobile carrier 20 is initiated when a reader unit RD onboard the mobile carrier 20 reads the identification feature 16 of the storage unit 1 the mobile carrier has approached and confirms that the storage unit 1 concerned corresponds to that intended for the transfer (in other words, the reader RD is configured to check consistency with the mission data of the mobile carrier 20 through the identification feature 16).

The mobile carrier 20 with the storage unit 1 riding piggyback then travels to the target location - for instance an operator station wherein the human operator is instructed to pick products from the storage unit 1 to assemble a purchase order - and stops at the same to release the storage unit 1 thereat. Release of the storage unit 1 (figure 4C, POSITIONING - RELEASE) comprises lowering the ride height of the mobile carrier 20 to restore contact of the frame 2 with the bearing surface G (or another bearing surface if the target location does not share the surface G) and concurrently break contact with and release the frame 2, particularly with the crosspiece 2C.

The mobile carrier 20 accordingly becomes vacant and can be managed according to the desired working flow layout in the facility. For instance, the vacant mobile carrier 20 can remain at standby beneath the frame 2, so to be ready to take the storage unit away from the target location when the human operator HU has finished the scheduled task, or else be routed to another location - for instance, another storage unit standing by at the storage area SSA or at another operator station. Variable ride height may not be, however, the sole possibility to perform transfer operations of the storage units 1 from a first location to a target location.

In general, the invention envisages directing the mobile carrier 20 along a bearing surface of the first frame 2 and positioning the mobile carrier 20 at a resting location of the first frame on the bearing surface. The mobile carrier 20 is then docked with the first frame 2 and lifts the first frame 2 from the bearing surface. Lifting can be achieved via variation of the ride height, as described, but also through a lifting facility on the mobile carrier, for instance a vertically movable bearing plate. Transferring the storage unit from a first location to a second location accordingly comprises directing the mobile carrier 20 carrying the storage unit 1 to the target location, and releasing the storage unit 1 at the target location by landing the first frame 2 on a bearing surface at the target location by means of the mobile carrier 20.

Again, landing can be achieved via variation (lowering) of the ride height of by lowering of the lifting facility onboard the mobile carrier 20.

Regardless of the mobile carrier 20 involved, throughout all the transfer process the second frame 4 of the unit 1 remains in the first position, i.e. fully upright. All of the closure devices 12 also remain in the fully closed position so that access to the containers 8 through the access openings 10 is disabled.

When the storage unit 1 is released at an operator station (figure 4D - OPERATION) the human operator HU can access the products in the containers 8 and begin the task he is in charge of. The containers 8 are made accessible through operation of the second drive unit D2, which brings all of the closure devices 12 into a position which enables access to the containers through the access openings 10. In the preferred embodiments, this means rolling up all of the shutters 12 to clear the way to the interior of the containers 8.

Note that human operator stations do not require a repositioning of the frame 4 into the second position, since the first, upright position of the frame 4 enables the operator HU to pick up all of the products needed to perform the task without any ergonomic issues.

Figures 5A and 5B are exemplary of the operation of the storage unit 1 at a robotic handling station of the most common type, i.e. featuring an overhead robot RH. All of the steps described with reference to figures 4A to 4C remain the same (figure 5A corresponds to figure 4C as far as the sequence step is concerned), but when the mobile carrier 20 releases the storage unit 1 at the robotic handling station (figure 5B) the frame 4 has to be repositioned into the second position, which in the preferred embodiment herein is a fully horizontal recumbent position visible in figure 5B. repositioning is effected through operation of the drive unit D1 (rotation θ4 in figure 5B) once the storage unit 1 has been released by the mobile carrier 20, and has the effect of rendering the containers 8 readily accessible to the robot RH. Once the closure devices 12 have been moved to a position which enables access to the containers 8, the robot RH can pick from or release products P into the containers 8 guided by a vision system VS which is configured to guide the robot RH to pickup locations at the containers 8, and to read the identification features 14 to determine the type of product in each container 8. The closure devices 12 can be controlled to enable access to the containers 8, alternatively, prior to moving the second frame 4 in the second position or after moving the second frame 4 in the second position.

More in general, the human operator HU or the robot RH may pick products from the containers 8 and place the same into another storage unit such as a bin wherein a purchase order is assembled when the storage unit 1' operates in a shelf to bin area (STB), or pick products from an outer storage unit and place them into the containers 8 when the storage unit 1' operates in bin to shelf area (BTS). Essentially, a selective handling of products P to and from the one or more storage containers 8 is envisaged.

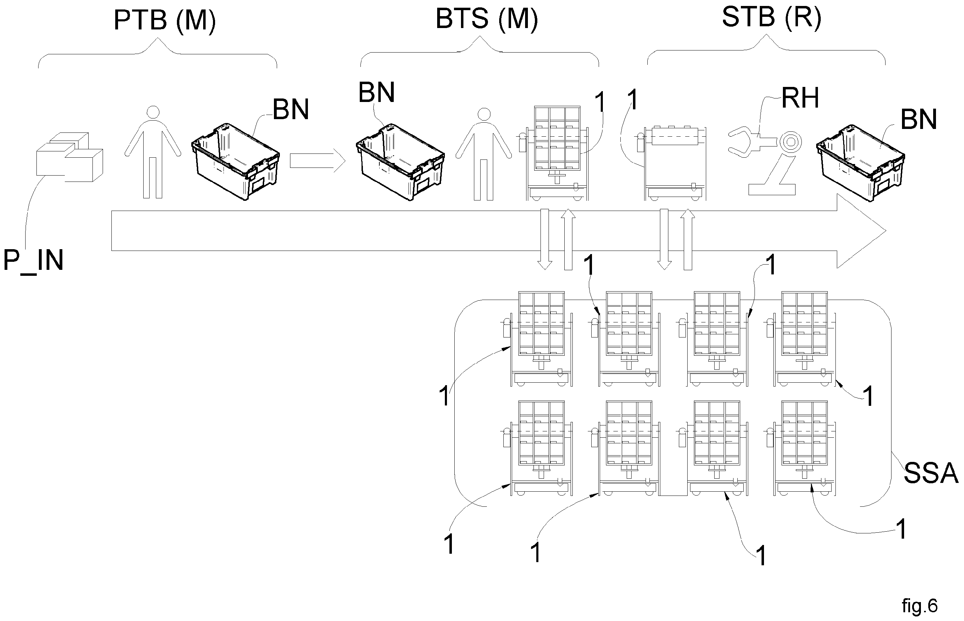

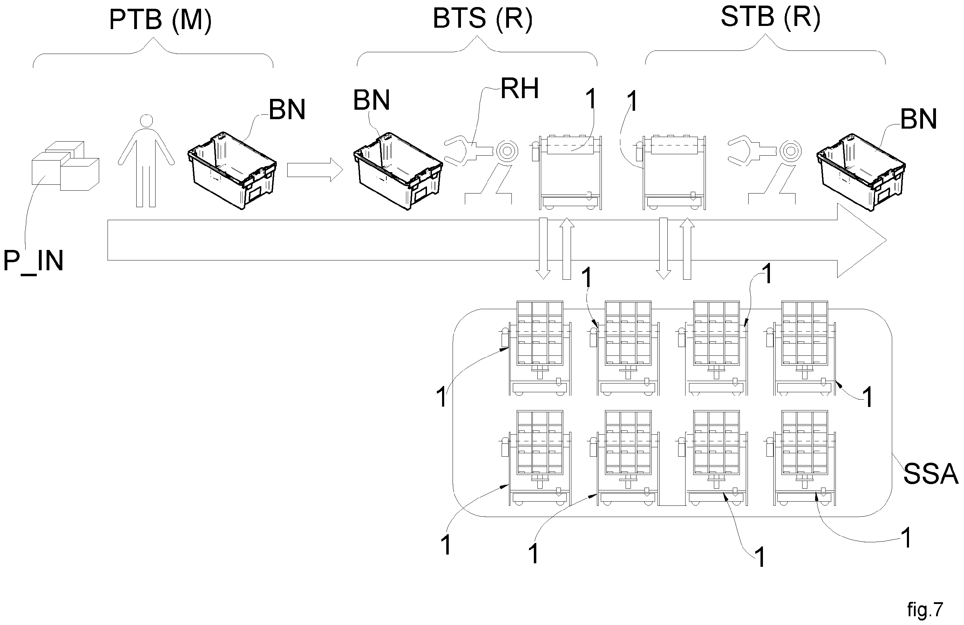

In this regard, with reference to figures 6 and 7, the adaptive nature of the storage unit 1 owing to the possibility to vary the position of the second frame 4 with respect to the frame 1, hence the possibility to vary the orientation of the access openings so to present the containers with the optimal orientation depending on the nature of the picking agent - human/manual (M) or robotic ^{®} - renders the storage 1 particularly feasible in clustering areas CA. For instance, figure 6 shows a mildly automated clustering area wherein the product-to-bin (PTB) and the bin-to-shelf (BTS) areas are still operated manually, although the latter is operated through the storage unit 1, while the shelf-to-bin area STB is fully automated and operated by a robot RH. Note that the adaptive nature of the storage unit 1 is well represented in the figure in that the storage unit 1 operates in the first operating position (upright) at the area BTS, and in the second operating position at the area STB (recumbent - horizontal): the storage unit 1 can therefore self- adapt to the features of the picking agent.

With reference to figure 7, the same clustering area may be designed with a higher degree of automation by automating the area BTS in addition to the area STB. Again, automation is achieved thanks to the adaptive nature of the storage unit 1, which can adapt to the change in the picking agent (from human to robotic) simply by repositioning the frame 4.

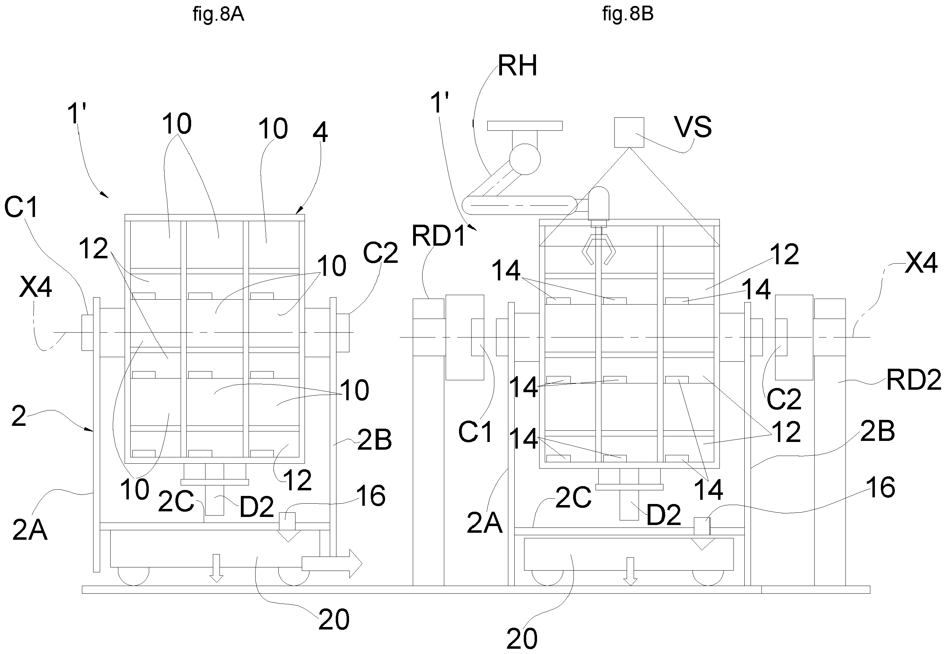

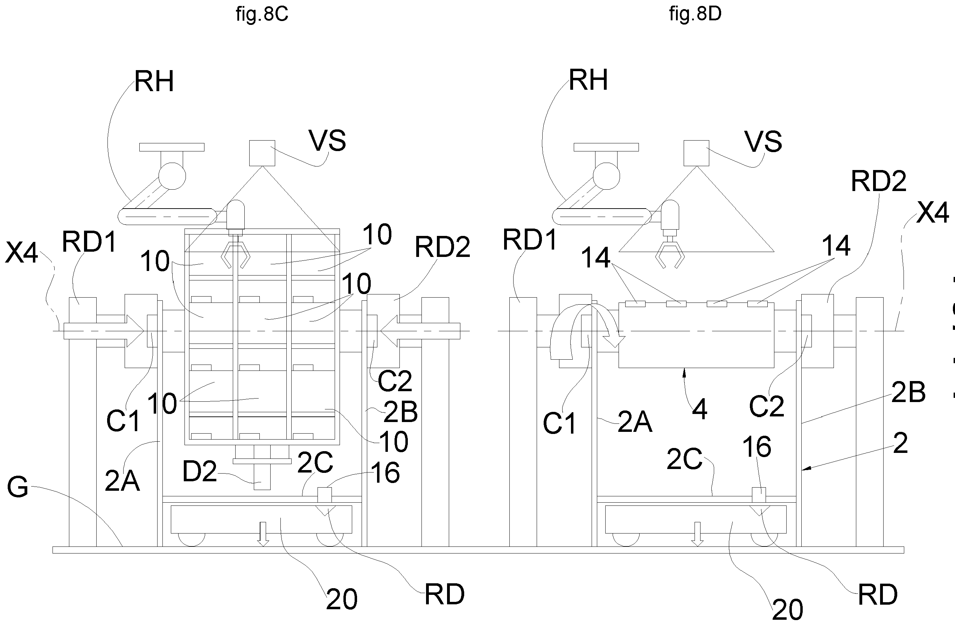

Figures 8A to 8D are representative of second embodiments of the invention wherein the storage unit is designated by reference 1'. Reference numbers identical to those used in the foregoing designate the same components. The storage unit 1' is overall identical to the storage unit 1, only it differs in that there is no drive unit D1. Repositioning of the frame 4 is achieved, instead, in that the second frame 4 is rotatably operable in the relative motion with respect to the first frame 2 via a coupling facility C1, C2 to a drive unit RD1, RD2 which is separate from the storage unit 1', wherein the drive unit RD1, RD2 is engageable with the coupling facility C1, C2 to operate the second frame 4. The coupling facility C1, C2 of the storage unit can be provided as a joint portion at the pivot points on the axis X4 (for instance, a shape coupling joint at each of C1, C2), while the drive unit can be provided as a pair of movable posts RD1, RD2 which are located at each processing station the storage unit is intended to be released at, and that are capable of a docking motion to the coupling facility on the storage unit 1 as shown in figure 8C.

Each of the posts RD1, RD2 may be provided with a motor unit to drive the rotation of the frame 4 via the torsional coupling with C1, C2.

The operational sequence depicted in figures 8A-8D is equivalent to that of the storage unit 1 described with reference to figures 4A to 4D as far as the operation of the mobile carrier 20 is concerned, but it involves additional steps to achieve docking of the drive unit RD1, RD2 and the coupling facility onboard the storage unit 1'.

Figure 8A corresponds to figure 4C, and shows the positioning of the mobile carrier 20 at the target location, with release of the storage unit 1' (figure 8B) due to the reduction in the ride height of the mobile carrier 20. The drive unit RD1, RD2 is not yet docked to the storage unit 1', which is released at a position comprised between the posts RD1, RD2 which are standing by for docking.

Only when release of the storage unit 1' is completed (figure 8C) does the docking process begin with a closing up of the posts RD1, RD2 onto the coupling facility C1, C2 at the pivot points of the second frame 4 on the axis X4. In particular, the posts RD1, RD2 close up by moving along the axis X4 until docking with the coupling facility C1, C2 is completed. In figure 8D, once docking is achieved the drive unit RD1, RD2 causes repositioning of the frame 4 in the second position (again, recumbent - horizontal) to present the robot RH with the access openings 10 and enable picking of products from and/or release of the same into the containers 8 by the robot RH. The drive unit D2 onboard the storage unit 1 is operated to control the closure devices 12 to enable access to the containers when repositioning to the second position has been completed. As with the embodiments disclosed in the foregoing, the closure devices 12 can be alternatively controlled to enable access to the containers 8 prior to moving the second frame in the second position.

The robot RH may pick products from the containers 8 and place the same into another storage unit such as a bin wherein a purchase order is assembled when the storage unit 1' operates in the area STB - shelf to bin, or pick products from an outer storage unit and place them into the containers 8 when the storage unit 1' operates in the BTS area - bin to shelf.

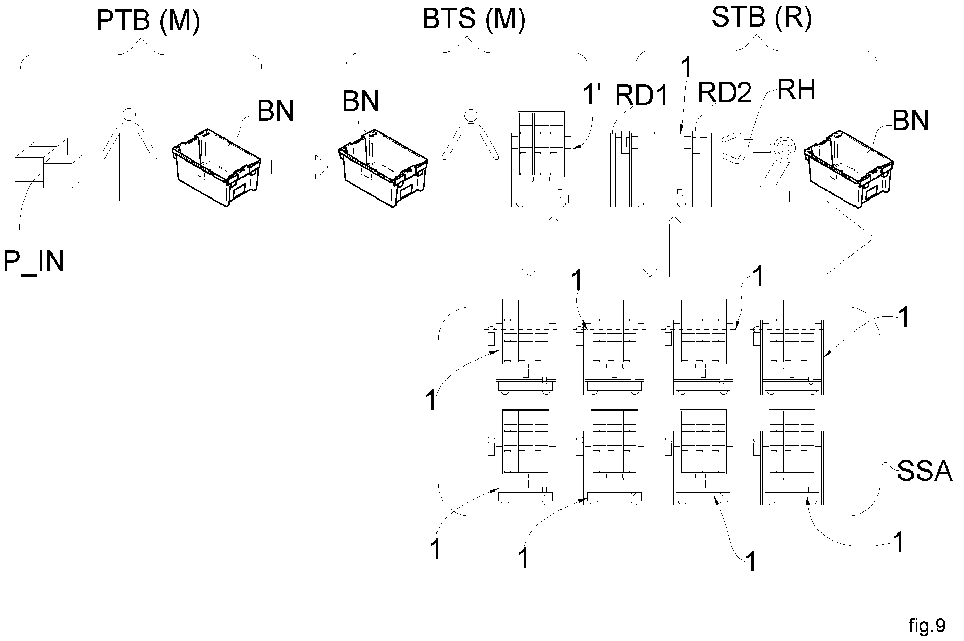

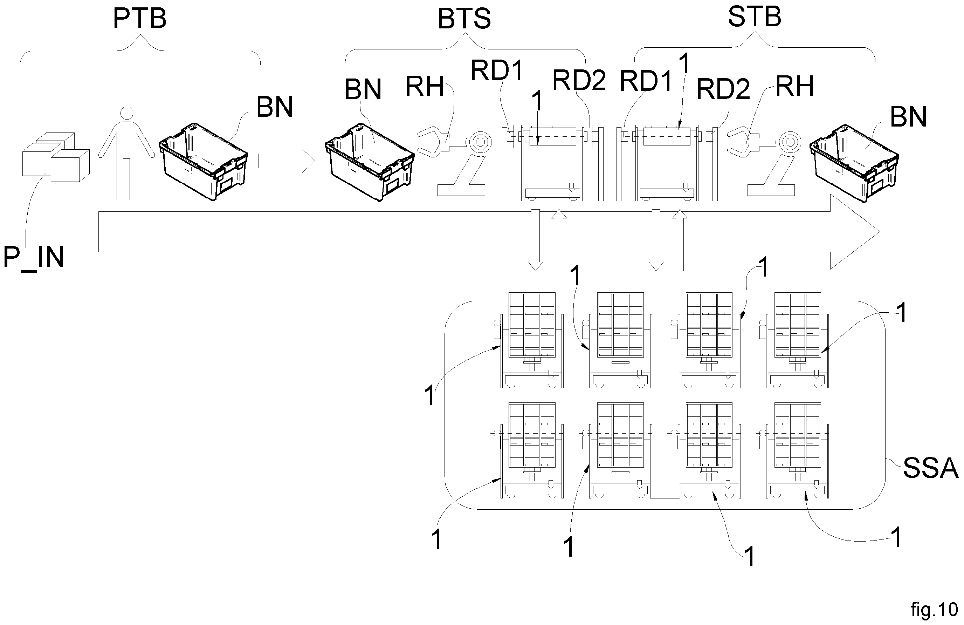

Figures 9 and 10 are equivalent to figures 6 and 7, and show the same operational layouts implemented through the storage unit 1'.

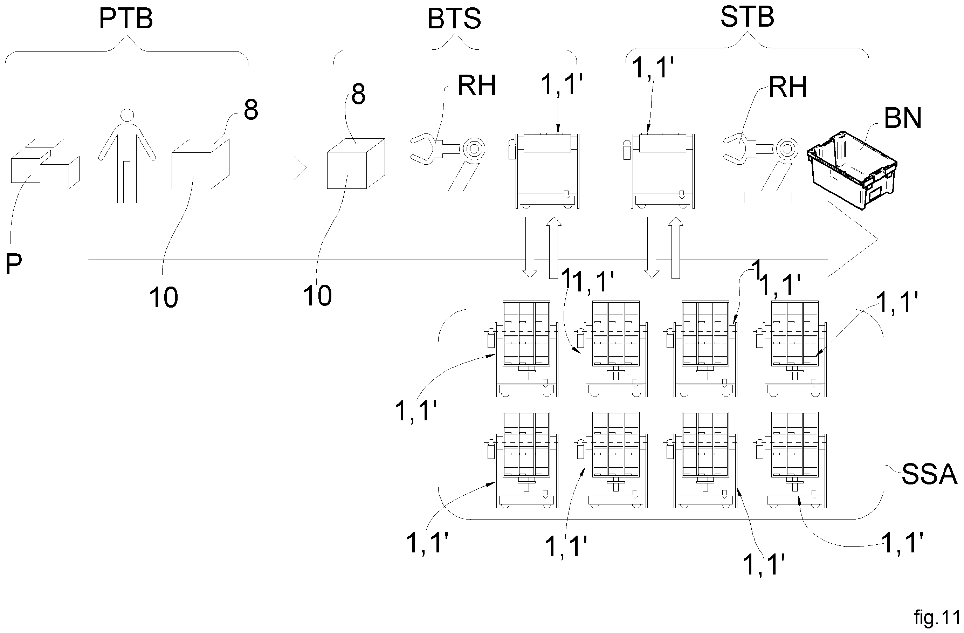

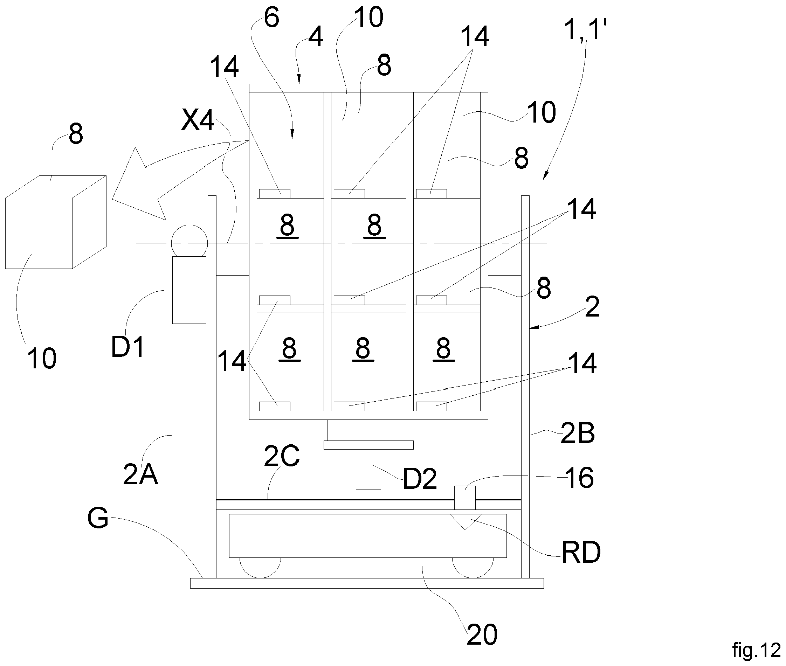

Figures 11 and 12 are representative of a feature readily applicable to the storage units 1 and 1': unlike the storage devices 1, 1' wherein the containers 8 are defined by the partition of the storage compartment 6, the containers 8 are provided as extractable components which can be separated from the storage compartment 6 (and the storage unit 1, 1' overall) to be used, for example as bins BN in the clustering area. In these embodiments, products P can be stored in one or more extracted containers 8 in the PTB area (manually operated), and the extracted containers 8 filled with products P may be processed at the BTS area - here identified as robotic. The robot RH may pick products from the extracted container 8 used as a bin BN and store them in the storage unit 1, 1' at the BTS area, or pick the very extracted container 8 and release the same at a vacant partition in the storage compartment of the storage unit 1, 1', depending on the logistic layout.

Naturally, while the principle of the invention remains the same, the details of construction and the embodiments may widely vary with respect to what has been described and illustrated purely by way of example, without departing from the scope of the present invention.

## Claims

1. A storage unit (1; 1') comprising:
- a first frame (2),
- a second frame (4), the second frame (4) being coupled to the first frame (2) and being movable with respect to the first frame (4),
wherein:
- the first frame (2) is configured for sitting onto a onto a bearing surface (G),
- the second frame (4) comprises a storage compartment (6) partitioned into one or more storage containers (8) each having at least one access opening (10) and configured to receive one or more products (P) to be handled,
- and further wherein the second frame (4) is movable with respect to the first frame (2) from a first position wherein the access openings (10) have a first orientation with respect to the first frame (2), and a second position, wherein the access openings (10) have a second orientation with respect to the first frame (2).

2. The storage unit (1; 1') according to claim 1, wherein the access openings (10) each include a closure device (12) operable to selectively enable or disable access to the respective storage container (8) through the access opening (10).

3. The storage unit (1; 1') according to any of the previous claims, wherein the first position of the second frame (4) is an upright position, and the second position of the second frame (4) is a recumbent position, whereby the one or more access openings (10) face upwards when the second frame (4) is in the second position.

4. The storage unit (1; 1') according to any of the previous claims, wherein the one or more access openings (10) face on one and the same side of the second frame (4).

5. The storage unit (1; 1') according to any of the previous claims, wherein the second frame (4) is pivotally connected to the first frame (2), whereby the second frame (4) is rotatable with respect to the first frame (2).

6. The storage unit (1) according to Claim 5, wherein the second frame (4) is rotatably operable in the relative motion with respect to the first frame (2) by a drive unit (D1) onboard the storage unit (1; 1').

7. The storage unit (1) according to Claim 5, wherein the second frame (4) is rotatably operable in the relative motion with respect to the first frame (2) via a coupling facility (C1, C2) to a drive unit (RD1, RD2) which is separate from the storage unit (1'), the drive unit (RD1, RD2) being engageable with the coupling facility to operate the second frame (4).

8. The storage unit (1; 1') according to any of the previous claims, wherein the closure devices are operable through a drive unit (D2) onboard the storage unit (1; 1').

9. The storage unit (1; 1') according to any of the previous claims, wherein the storage containers (8) are extractable from the storage compartment (6).

10. The storage unit (1; 1') according to any of the previous claims, wherein each storage container (8) comprises an identification feature (14) chosen from among a barcode, a RFID tag or a QR code.

11. A method of handling products, comprising:
- providing a storage unit (1; 1') according to any of the previous claims,
- providing a mobile carrier (20),
- engaging the first frame (2) of the storage unit (1; 1') by the mobile carrier (20)
- transferring the storage unit (1; 1') from a first location to a second, target, location by means of the mobile carrier (20), the second frame (4) being in the first position,
- moving the second frame (4) from the first position to the second position to present the access openings (10) to an overhead robotic handling unit (RH) or keeping the second frame in the first position to present the access openings (10) to a human operator (HU)
- selectively handling products to and from the one or more storage containers (8).

12. The method of Claim 11, wherein said mobile carrier comprises an automated guided vehicle (20), whereby engaging the first frame comprises:
- directing the mobile carrier (20) along a bearing surface (G) of the first frame (2) and positioning the mobile carrier (20) at a resting location of the first frame (2) on the bearing surface (G),
- engaging the mobile carrier (20) with the first frame (2) and lifting the first frame from the bearing surface (G) by means of the mobile carrier (20), and wherein transferring the storage unit from a first location to a second, target, location comprises directing the mobile carrier (20) carrying the storage unit to the target location, and releasing the storage unit at the target location by landing the first frame (2) on a bearing surface at the target location by means of the mobile carrier (20).

13. The method of Claim 11 or Claim 12, wherein moving the second frame (4) from the first position to the second position 7 comprises operating the second frame (4) through engagement of a coupling facility thereof (C1, C2) to a drive unit (RD1, RD2) which is separate from the storage unit (1').

14. The method of any of claims 11 to 13, comprising operating the closure devices (12) to enable access to the storage containers (8) before moving the second frame (4) from the first position to the second position.

15. The method of any of claims 11 to 14, wherein the wherein the first position of the second frame (4) is an upright position, and the second position of the second frame (4) is a recumbent position, whereby the one or more access openings (10) face upwards when the second frame (4) is in the second position.
